**Europäisches Patentamt**

**European Patent Office**

**Office européen des brevets**

(19)

(11) Veröffentlichungsnummer: **0 008 729**
B1

# EUROPÄISCHE PATENTSCHRIFT

(45) Veröffentlichungstag der Patentschrift:
24.03.82

(21) Anmeldenummer: 79103037.2

(22) Anmeldetag: 20.08.79

(51) Int. Cl.³: **C 08 L 77/00, C 08 J 3/22**

(54) Verfahren zur Stabilisierung von Polyamid-Formmassen.

(30) Priorität: 09.09.78 DE 2839350

(43) Veröffentlichungstag der Anmeldung:
19.03.80 Patentblatt 80/6

(45) Bekanntmachung des Hinweises auf die Patenterteilung:
24.03.82 Patentblatt 82/12

(84) Benannte Vertragsstaaten:
BE DE FR GB IT NL

(56) Entgegenhaltungen:
CH-A-566 274
DE-A-2 454 770
DE-A-2 703 416

(73) Patentinhaber: BASF Aktiengesellschaft,
Carl-Bosch-Strasse 38, D-6700 Ludwigshafen (DE)

(72) Erfinder: Theysohn, Rainer, Dr., 38 Bruesseler Ring,
D-6700 Ludwigshafen (DE)
Erfinder: Dorst, Hans Georg, Dr. Dipl-Ing., Berliner
Strasse 23, D-6705 Deidesheim (DE)
Erfinder: Zeitler, Gerhard, Dr., Lessingstrasse 11,
D-6711 Hessheim (DE)

Verfahren zur Stabilisierung von Polyamid-Formmassen

Die Erfindung betrifft ein Verfahren zur Stabilisierung von vorzugsweise gefüllten Polyamiden, insbesondere gegen die Einwirkung von Wärme und Sauerstoff, wobei der Stabilisator als Konzentrat in einem COOH-gruppenhaltigen Copolymerisat oder Pfropfcopolymerisat des Äthylens oder Propylens zugesetzt wird.

Es ist bekannt, dass Polyamide, vor allem bei Temperaturen oberhalb 100°C sehr anfällig gegen Thermooxydation sind. Dies ist besonders dann der Fall, wenn die Polyamidformmassen noch Füllstoffe enthalten, wobei die Anfälligkeit um so grösser ist, je kleiner die Partikelgrösse und je höher der Füllstoffgehalt ist.

Als Stabilisatoren gegen Thermooxydation werden bei ungefüllten Polyamiden üblicherweise sterisch gehinderte Phenole oder Aminverbindungen verwendet. Verfährt man analog bei gefüllten Polyamiden, so stellt man fest, dass bei vergleichbaren Mengen an Stabilisator, bezogen auf Polyamid, die stabilisierende Wirkung deutlich geringer ist. Um eine ähnlich gute Stabilisierung wie bei ungefülltem Polyamid zu erreichen, sind bei gefüllten Polyamidformmassen daher höhere Stabilisatormengen notwendig. Dies ist insofern nachteilig, als es einmal eine Verteuerung des Produktes bedeutet und zum anderen die Stabilisatorgehalte in manchen Fällen die lebensmittelrechtlich zulässigen Höchstmengen überschreiten.

In den DE-OS 2 454 770 und 2 703 416 sind Polyamid-Formmassen beschrieben, denen zur Verbesserung der Zähigkeit Pfropfpolymerisate von (Meth-)Acrylsäure auf Olefin-Polymerisate zugesetzt werden. Die Formmassen können auch übliche Füllstoffe und Stabilisatoren enthalten.

Es ist auch bekannt, Zusatzstoffe in Form von Konzentraten in Polyamide einzuarbeiten. In der DE-AS 1 262 585 ist beispielsweise ein Pigment-Konzentrat in einem Äthylen-Copolymerisat beschrieben, das zum Einfärben von Polyamiden verwendet werden soll.

Der Erfindung lag die Aufgabe zugrunde, ein Verfahren zur Stabilisierung von gefüllten Polyamiden mit möglichst niedrigen Gehalten an Stabilisator zu entwickeln.

Diese Aufgabe wird erfindungsgemäss dadurch gelöst, dass der Stabilisator nicht in Substanz zugesetzt wird, sondern in Form eines Stabilisatorkonzentrats in einem COOH-gruppenhaltigen Copolymerisat oder Pfropfcopolymerisat des Äthylens oder Propylens. Eine solche Verfahrensweise erlaubt bei gleicher Stabilität der Formmassen eine Reduzierung des Gehaltes an Stabilisator um 40-90%.

Gegenstand der Erfindung ist ein Verfahren zum Stabilisieren von Polyamid-Formmassen gegen thermooxydativen Abbau durch Zusatz von 0,1 bis 2 Gewichtsprozent, bezogen auf Polyamid, eines üblichen Stabilisators, bei dem der Stabilisator in Form eines Konzentrats in einem COOH-gruppenhaltigen Copolymerisat oder Pfropfcopolymerisat des Äthylens oder Propylens mit einer Säurezahl von 10 bis 40 zugesetzt wird, wobei der Stabilisatorgehalt des Konzentrats zwischen 5 und 60 Gewichtsprozent liegt.

Die Polyamide sind bevorzugt gesättigte, lineare Polyamide mit einem K-Wert [gemessen nach Fikentscher, Cellulosechemie 13 (1932), Seite 58, in 1%iger Lösung in konzentrierter Schwefelsäure] von 60 bis 80. Geeignet sind z.B. Polycaprolactam (Polyamid-6), Polyhexamethylenadipinsäureamid (Polyamid-6.6), Polyhexamethylensebazinsäureamid, Polylaurinlactam, Polyundecanamid; ferner Homo- und Copolyamide, die unter Verwendung von Adipinsäure, Azelainsäure, Sebazinsäure, Dodecandisäure, Terephthalsäure einerseits und Hexamethylendiamin, Trimethylhexamethylendiamin, Bis-(4-aminocyclohexyl)-methan, 2,2-Bis-(4'-aminocyclohexy)-propan andererseits hergestellt werden; sowie Copolyamide, die durch Polykondensation von Lactamen zusammen mit den obengenannten Dicarbonsäuren und Diaminen erhalten werden. Geeignet sind auch Gemische. Bevorzugt sind Polyamid-6 und Polyamid-6.6.

Als Füllstoffe kommen in Frage: globuläre, körnige oder blättchenförmige Stoffe wie z.B. Glaskugeln, Kreide, Talkum, Glimmer, Wollastonit, Bariumsulfat, Graphit, Russ, Kaolin, calciniertes Kaolin, Quarz, amorphes $SiO_2$; faserförmige Füllstoffe wie Glasfasern, Mineralfasern, Asbestfasern, Kohlenstoff-Fasern, organische Fasern mit einem Schmelzpunkt höher als der der jeweiligen Polyamidmatrix sowie Mischungen verschiedener Füllstoffe. Die Füllstoffe sind in den Formmassen in Mengen von 5 bis 140 Gewichtsprozent, bezogen auf Polyamid, enthalten. Bevorzugte Füllstoffe sind Talkum, Glaskugeln, Kreide, calciniertes Kaolin und amorphes $SiO_2$ in Mengen von 10 bis 100 Gewichtsprozent.

Als Stabilisatoren werden marktgängige Polyamidstabilisatoren, insbesondere solche auf Basis sterisch gehinderter Phenole oder Aminstabilisatoren verwendet, beispielsweise N,N-Hexamethylen-bis-(3,5-di-tert.-butyl-4-hydroxy-hydrozimtsäureamid) und das Kondensationsprodukt aus Diphenylamin und Aceton nach US-PS 3 003 995.

Die Stabilisatoren werden erfindungsgemäss als Konzentrate in COOH-gruppenhaltigen Copolymerisaten oder Pfropfcopolymerisaten des Äthylens oder Propylens eingesetzt. In Frage kommen z.B. Copolymere aus Äthylen oder Propylen mit tert.-Butylacrylat, die einer teilweisen Esterpyrolyse unterzogen wurden; bevorzugt sind Pfropfcopolymere von Methacrylsäure, Acrylsäure oder Maleinsäureanhydrid auf Olefin-Polymerisate, wie sie in den DE-OS 2 454 770 oder DE-OS 2 703 416 beschrieben sind.

Besonders bevorzugt sind Pfropfpolymerisate von 0,5 bis 10 Gewichtsteilen Acrylsäure oder Methacrylsäure auf 100 Gewichtsteile

a) Polyäthylen einer Dichte von 0,918 bis 0,965 g/cm³,

b) Polypropylen einer Dichte von 0,898 bis 0,908 g/cm³ oder

c) einem Copolymeren aus 1 bis 50 Gewichtsprozent Äthylen und 50 bis 99 Gewichtsprozent Propylen.

Bei der Herstellung solcher Pfropfpolymerisate liegt die zu pfropfende Polymerphase vorzugsweise als Pulver mit einem Teilchendurchmesser zwischen 100 und 5000 μm, insbesondere 500 bis 2000 μm vor. Die Polymerisation wird in Gegenwart von 0,2 bis 5 Gewichtsprozent, bezogen auf (Meth-)Acrylsäure, eines Peroxids, z.B. Benzoylperoxid, bei Temperaturen durchgeführt, die mindestens 10°C unterhalb der Schmelztemperatur des zu pfropfenden Polyolefins liegen sollen. Die Dauer der Pfropfung ist abhängig von der Pfropftemperatur und von der Zerfallstemperatur des verwendeten Peroxids. Sie liegt im Schnitt bei 0,5 bis 4 Stunden. Der Fortschritt der Pfropfung wird durch die Säurezahl an einer Lösung des Propfpolymerisats in o-Xylol bestimmt. Die Säurezahl der Pfropfcopolymerisate liegt zwischen 10 und 40, insbesondere zwischen 25 und 35.

Die erfindungsgemäss erhaltenen Polyamid-Formmassen können weiterhin noch übliche Zusatzstoffe, wie Farbstoffe und Farbpigmente, Antistatika, Wachse, Gleitmittel und Verarbeitungshilfsmittel, die ein störungsfreies Extrudieren und Spritzgiessen gewährleisten, enthalten.

Die Herstellung der Konzentrate erfolgt durch Einarbeitung des Stabilisators in eine Schmelze des Olefin-Polymerisats in gängigen Mischaggregaten, wie Extrudern, Schneckenknetern, Innenmischern oder Walzenpressen. Die Konzentrate können als Granulat oder gemahlenes Pulver vorliegen. Der Stabilisatorgehalt im Konzentrat liegt bei 5 bis 60, vorzugsweise bei 10 bis 50 Gewichtsprozent. Das Konzentrat kann mit Polyamid-Granulat vor der Einarbeitung der Füllstoffe abgemischt werden, es kann aber auch bei der Einarbeitung der Füllstoffe in Polyamid kontinuierlich zudosiert werden. Es besteht schliesslich auch die Möglichkeit, das gefüllte Polyamid mit dem Stabilisatorkonzentrat abzumischen und direkt einer weiteren Verarbeitung z.B. im Extrusions- oder Spritzgiessverfahren zuzuführen.

Die in den Beispielen genannten Teile und Prozente beziehen sich auf das Gewicht.

Beispiel 1

Auf einem Walzenmischer wurden bei 200°C 80 Teile eines acrylsäuregepfropften Polypropylens mit einer Säurezahl von 30 und einem Schmelzindex MFI = 0,1 (230°C, 2,16 kg) aufgeschmolzen und 20 Gewichtsteile N,N'-Hexamethylen-bis-3,5-di-tert.-butyl-4-hydroxy-hydrozimtsäureamid zugegeben und homogen eingearbeitet. Das erhaltene Walzfell wurde nach dem Abkühlen gemahlen.

97,5 Teile 6-Polyamid vom K-Wert 72 [gemessen nach Fikentscher, Cellulosechemie 13 (1932), Seite 58, in 1%iger Lösung in konzentrierter Schwefelsäure] und 2,5 Teile des Stabilisatorkonzentrats wurden mechanisch gemischt, einem Zweischneckenkneter zugeführt und dort bei Temperaturen von 270°C aufgeschmolzen. Durch eine Öffnung, die sich stromabwärts befindet, wurden 47 Teile feinteiliges Talkum mit einem maximalen Blättchendurchmesser von 20 μm und einer maximalen Blättchendicke von 2 μm zugegeben. Das schmelzflüssige homogene Gemisch wurde in Form von Strängen ausgetragen, gekühlt und granuliert.

Aus dem Granulat wurden Prüfkörper in den Abmessungen 4×6×50 mm bei Temperaturen von 280°C durch Spritzgiessen hergestellt. Von einem Teil der Prüfkörper wurde die Schlagzähigkeit nach DIN 53 453 gemessen (O-Probe). Der Rest wurde in einem Umluft-Trockenschrank bei 110°C gelagert. In gewissen Zeitabständen wurden hiervon jeweils Proben entnommen und die Schlagzähigkeit geprüft. Als Mass für die Stabilität der Formmassen wurde der prozentuale zeitliche Schlagzähigkeitsabfall im Vergleich zur O-Probe berechnet (Einzelheiten siehe Tabelle 1).

Beispiel 2 (Vergleich)

97,5 Teile Polyamid 6 (K-Wert 72), 2,0 Teile acrylsäuregepfropftes Polypropylen (Säurezahl 30), 0,5 Teile N,N'-Hexamethylen-bis-3,5-di-tert.-butyl-4-hydroxy-hydrozimtsäureamid und 47 Teile Talkum wurden getrennt in einen Zweischneckenextruder zugegeben und wie in Beispiel 1 verarbeitet.

Beispiel 3 (Vergleich)

97,5 Teile 6-Polyamid vom K-Wert 72 und 0,5 Teile N,N'-Hexamethylen-bis-3,5-di-tert.-butyl-4-hydroxy-hydrozimtsäureamid wurden mechanisch gemischt, einem Zweischneckenkneter zugeführt und dort bei Temperaturen von 270°C aufgeschmolzen. Die Einarbeitung des Talkums und die Prüfung der Stabilität erfolgte wie in Beispiel 1.

Beispiel 4 (Vergleich)

97,5 Teile 6-Polyamid vom K-Wert 72 und 2,2 Teile N,N'-Hexamethylen-bis-3,5-di-tert.-butyl-4-hydroxy-hydrozimtsäureamid wurden mechanisch vermischt, einem Zweischneckenextruder zugeführt und dort bei Temperaturen von 270°C aufgeschmolzen. Die Einarbeitung des Talkums und die Prüfung der Stabilität erfolgte wie in Beispiel 1.

Beispiel 5 (Vergleich)

97,5 Teile 6-Polyamid vom K-Wert 72 und 2 Teile eines acrylsäuregepfropften Polypropylens mit einer Säurezahl von 30 und einem MFI = 0,1 (230°C, 2,16 kg) wurden mechanisch gemischt, einem Zweischneckenkneter zugeführt und dort bei 270°C aufgeschmolzen. Die Einarbeitung des Talkums und die Prüfung der Stabilität erfolgte wie in Beispiel 1.

Bei einem Vergleich der Beispiele 1 bis 4 zeigt sich, dass der Stabilisatorgehalt erheblich reduziert werden kann, wenn man den Stabilisator erfindungsgemäss in Form eines Konzentrats einarbeitet.

Tabelle 1

| Beispiel Nr. | Stabilisatorgehalt (%) | prozentuale Änderung der Schlagzähigkeit (110°C) nach Tagen | | | | |
|---|---|---|---|---|---|---|
| | | 30 | 60 | 80 | 100 | 120 Tage |
| 1 | 0,5 | − 1,5 | − 3,0 | −10,7 | −15,2 | −17,5 % |
| 2 (Vergleich) | 0,5 | − 1,5 | − 8,2 | −42,0 | −50,7 | −66,8 % |
| 3 (Vergleich) | 0,5 | − 1,5 | − 9,3 | −40,0 | −53,3 | −68,5 % |
| 4 (Vergleich) | 2,200 | − 2,0 | − 2,4 | −10,4 | −16,6 | −20,4 % |
| 5 (Vergleich) | − | −90,0 | −90,0 | −90,0 | −90,7 | −92,3 % |

Beispiel 6

Auf einem Walzenmischer wurden bei 200°C 66,6 Teile eines acrylsäuregepfropften Polypropylens mit einer Säurezahl von 30 und einem MFI von 0,1 (230°C, 2,16 kg) aufgeschmolzen und 33,3 Teile eines Reaktionsproduktes aus Diphenylamin und Aceton zugegeben und homogen vermischt. Das erhaltene Walzfell wurde nach dem Abkühlen gemahlen.

97 Teile eines 6.6-Polyamids vom K-Wert 72 und 3 Teile des Stabilisatorkonzentrats wurden mechanisch vermischt, einem Zweischneckenkneter zugeführt und dort bei Temperaturen von 280°C aufgeschmolzen. Durch eine Öffnung die sich stromabwärts befindet, wurden 47 Teile Glaskugeln aus A-Glas mit einem Teilchendurchmesser im Bereich von 10 bis 50 μm, die mit einem Silanhaftvermittler ausgerüstet waren, zugegeben. Das schmelzflüssige homogene Gemisch wurde in Form von Strängen ausgetragen, gekühlt und granuliert.

Aus dem Granulat wurden Prüfkörper hergestellt und die Hitzestabilität, wobei die Wärmelagerung bei 140°C erfolgte (Ergebnisse in Tabelle 2).

Beispiel 7 (Vergleich)

97 Teile 6.6-Polyamid vom K-Wert 72 und 1 Teil des Reaktionsproduktes aus Diphenylamin und Aceton wurden mechanisch gemischt, einem Zweischneckenkneter zugeführt und dort bei Temperaturen von 285°C aufgeschmolzen. Die Einarbeitung der Glaskugeln und die Prüfung der Thermostabilität erfolgte wie in Beispiel 6.

Tabelle 2

| Beispiel Nr. | Stabilisatorgehalt (%) | prozentuale Änderung der Schlagzähigkeit (140°C) nach Tagen | | | |
|---|---|---|---|---|---|
| | | 10 | 15 | 20 | 30 Tage |
| 6 | 1,03 | − 4,6 | − 9,4 | −18,5 | −30,0 % |
| 7 (Vergleich) | 1,03 | −47,5 | −62,2 | −67,4 | −80,1 % |

Beispiel 8

Auf einem Gummikneter von 5 l Inhalt wurden bei 270°C 80 Teile eines Copolymerisats aus Äthylen und tert.-Butylacrylat (20 Gewichtsprozent) mit einem MFI von 6 (190°C, 2,16 kg) aufgeschmolzen und 20 Gewichtsteile Octadecyl-3-(3,5-di-tert.-butyl-4-hydroxyphenyl)-propionat zugegeben, homogen vermischt, als Strang ausgetragen, gekühlt und granuliert. Bei den Verarbeitungstemperaturen spaltet das Copolymerisat teilweise Isobutylen ab und es entstehen freie Carboxylgruppen.

95 Teile 6-Polyamid vom K-Wert 72 und 5 Teile des Stabilisatorkonzentrats wurden mechanisch gemischt, einem Zweischneckenkneter zugeführt und bei 270°C aufgeschmolzen. Durch eine Öffnung, die sich stromabwärts befindet, wurden 54 Teile Schnittglasfasern aus E-Glas mit einem mittleren Faserdurchmesser von 13 μm und einer Schnittlänge von 6 cm, die mit einem Silanhaftvermittler und einer Schlichte ausgerüstet waren, zugegeben. Die schmelzflüssige Mischung wurde in Strängen ausgetragen, gekühlt und granuliert.

Die Herstellung der Prüfkörper und die Prüfung der Wärmestabilität erfolgte wie in Beispiel 1 beschrieben (Ergebnisse in Tabelle 3).

Beispiel 9 (Vergleich)

95 Teile 6-Polyamid vom K-Wert 72 und 1 Teil Octadecyl-3-(3,5-di-tert.-butyl-4-hydroxyphenyl)-propionat wurden mechanisch gemischt, einem Zweischneckenkneter zugeführt und dort bei 270°C aufgeschmolzen. Die Einarbeitung der Glasfasern und die Prüfung der Stabilität erfolgte wie in Beispiel 1.

Tabelle 3

| Beispiel Nr. | Stabilisatorgehalt (%) | prozentuale Änderung der Schlagzähigkeit bei Wärmelagerung (110°C) nach Tagen | | | | |
|---|---|---|---|---|---|---|
| | | 5 | 10 | 20 | 30 | 50 Tage |
| 8 | 1,052 | +4 | − 2 | −10 | −10 | −16 % |
| 9 (Vergleich) | 1,052 | +6 | −10 | −28 | −44 | −48 % |

## Patentansprüche

1. Verfahren zum Stabilisieren von Polyamid-Formmassen gegen thermooxydativen Abbau durch Zusatz von 0,1 bis 2 Gewichtsprozent, bezogen auf Polyamid, eines üblichen Stabilisators, dadurch gekennzeichnet, dass der Stabilisator in Form eines Konzentrats in einem COOH-gruppenhaltigen Copolymerisat oder Pfropfcopolymerisat des Äthylens oder Propylens mit einer Säurezahl von 10 bis 40 zugesetzt wird, wobei der Stabilisatorgehalt des Konzentrats zwischen 5 und 60 Gewichtsprozent liegt.

2. Verfahren zum Stabilisieren von Polyamiden nach Anspruch 1, dadurch gekennzeichnet, dass die Polyamid-Formmassen 5 bis 140 Gewichtsprozent, bezogen auf Polyamid, Füllstoffe enthalten.

3. Verfahren zum Stabilisieren von Polyamiden nach Anspruch 2, dadurch gekennzeichnet, dass die Polyamid-Formmassen 10 bis 100 Gewichtsprozent, bezogen auf Polyamid, Talkum, Glaskugeln, Kreide, calciniertes Kaolin oder amorphes SiO₂ enthalten.

4. Verfahren zum Stabilisieren von Polyamiden nach Anspruch 1, dadurch gekennzeichnet, dass die Stabilisatoren Aminverbindungen oder sterisch gehinderte Phenole sind.

5. Verfahren zum Stabilisieren von Polyamiden nach Anspruch 1, dadurch gekennzeichnet, dass das COOH-gruppenhaltige Polymerisat ein Pfropfcopolymerisat con Acrylsäure, Methacrylsäure oder Maleinsäureanhydrid auf Polyäthylen oder Polypropylen ist.

6. Verfahren zum Stabilisieren von Polyamiden nach Anspruch 5, dadurch gekennzeichnet, dass das COOH-gruppenhaltige Polymerisat ein Pfropfcopolymerisat von 0,5 bis 10 Gewichtsteilen Acrylsäure oder Methacrylsäure auf 100 Gewichtsteile Polyäthylen oder Polypropylen ist.

## Claims

1. A process for stabilizing polyamide moulding compositions against thermooxidative degradation by adding from 0.1 to 2% by weight, based on polyamide, of a conventional stabilizer, characterized in that the stabilizer is added in the form of a concentrate in a COOH-containing copolymer or draft copolymer of ethylene or propylene having an acid number of from 10 to 40, the stabilizer content of the concentrate being between 5 and 60% by weight.

2. A process for stabilizing polyamides as claimed in claim 1, characterized in that the polyamide moulding compositions contain from 5 to 140% by weight, based on polyamide, of fillers.

3. A process for stabilizing polyamides as claimed in claim 2, characterized in that the polyamide moulding compositions contain from 10 to 100% by weight, based on polyamide, of talc, glass beads, chalk, calcined kaolin or amorphous SiO₂.

4. A process for stabilizing polyamides as claimed in claim 1, characterized in that the stabilizers are amine compounds or sterically hindered phenols.

5. A process for stabilizing polyamides as claimed in claim 1, characterized in that the COOH-containing polymer is a graft copolymer of acrylic acid, methacrylic acid or maleic anhydride on polyethylene or polypropylene.

6. A process for stabilizing polyamides as claimed in claim 5, characterized in that the COOH-containing polymer is a graft copolymer of from 0.5 to 10 parts by weight of ocrylic acid or methacrylic acid on 100 parts by weight of polyethylene or polypropylene.

## Revendications

1. Procédé pour stabiliser des matières à mouler à base de polyamides contre la dégradation par thermo-oxydation par incorporation de 0,1 à 2% en poids par rapport au polyamide d'un stabilisant usuel, caractérisé en ce que le stabilisant est ajouté sous forme d'un concentré dans un copolymérisat ou un copolymérisat de greffage de l'éthylène ou du propylène, contenant des groupes -COOH et possédant un indice d'acide de 10 à 40, la teneur en stabilisant du concentré se situant entre 5 et 60% en poids.

2. Procédé pour stabiliser des polyamides suivant la revendication 1, caractérisé en ce que les matières à mouler à base de polyamides contiennent 5 à 140% en poids par rapport au polyamide de matières de charge.

3. Procédé pour stabiliser des polyamides suivant la revendication 2, caractérisé an ce que les matières à mouler à base de polyamides contiennent 10 à 100% en poids par rapport au polyamide te talc, de billes de verre, de craie, de kaolin calciné ou de SiO₂ amorphe.

4. Procédé pour stabiliser des polyamides suivant la revendication 1, caractérisé en ce que le stabilisant est choisi parmi les composés aminés et les phénols stériquement empêchés.

5. Procédé pour stabiliser des polyamides suivant la revendication 1, caractérisé en ce que le polymérisat à groupes -COOH est un copolymérisat de greffage d'acide acrylique, d'acide méthacrylique ou d'anhydride maléique sur du polyéthylène ou du polypropylène.

6. Procédé pour stabiliser des polyamides suivant la revendication 5, caractérisé en ce que le polymérisat à groupes -COOH est un copolymérisat de greffage de 0,5 à 10 parties en poids d'acide acrylique ou d'acide méthacrylique sur 100 parties en poids de polyéthylène ou de polypropylène.